# EUROPEAN PATENT APPLICATION

(11) **EP 3 153 957 A1**
(43) Date of publication of application: **12.04.2017**
(21) Application number: 14873105.2
(22) Date of filing: 01.10.2014
(51) Int. Cl.: G06F 3/044, G02F 1/1333

(54) **ARRAY SUBSTRATE AND MANUFACTURING METHOD THEREFOR, AND DISPLAY DEVICE**

(30) Priority: 30.05.2014 CN 201410240517
(71) Applicant: BOE Technology Group Co., Ltd., Beijing 100015 (CN); Beijing BOE Optoelectronics Technology Co., Ltd., Beijing 100176 (CN)
(72) Inventor: YANG, Shengji, Beijing 100176 (CN); DONG, Xue, Beijing 100176 (CN); WANG, Haisheng, Beijing 100176 (CN); XUE, Hailin, Beijing 100176 (CN); LIU, Yingming, Beijing 100176 (CN); ZHAO, Weijie, Beijing 100176 (CN); LIU, Hongjuan, Beijing 100176 (CN); DING, Xiaoliang, Beijing 100176 (CN); WANG, Lei, Beijing 100176 (CN); WANG, Chunlei, Beijing 100176 (CN)
(74) Representative: Klunker . Schmitt-Nilson . Hirsch
(86) International application number: PCT/CN2014/088080
(87) International publication number: WO 2015/180358

(57) **Abstract**

An array substrate, a method for fabricating the same and a display device are disclosed. The substrate comprises: a gate electrode (11) and a gate line (12) disposed on a base substrate (00), an active layer (20) disposed on the film layer comprising the gate electrode (11) and the gate line (12). The substrate further comprises: a pixel electrode (40) disposed on the same layer as and electrically insulated from the active layer (20); a drain electrode (31), a source electrode (32) and a date line (33) disposed on the film layer comprising the active layer (20) and the pixel electrode (40), wherein the drain electrode (31) is electrically connected to the pixel electrode (40) directly; a common electrode layer (50) and a plurality of wires (60) disposed on the film layer having the drain electrode (31), the source electrode (32) and the date line (33) and electrically insulated from each of the drain electrode (31), the source electrode (32), the date line (33) and the pixel electrode (40); wherein the plurality of wires (60) is disposed on a different layer from the common electrode layer (50), the common electrode layer (50) comprises a plurality of self-capacitive electrodes (51) disposed in a same layer and insulated from each other, and each of the wires (60) is electrically connected to a corresponding self-capacitive electrode (51) through a via hole (100). The array substrate solves the problem of having a relatively large touch blind area in self-capacitive touch control structures.

## Description

### TECHNICAL FIELD

Embodiments of the invention relate to an array substrate, a method for fabricating the same and a display device.

### BACKGROUND

With the rapid development of display technologies, touch screen panels are widely used in people's daily life. Currently, touch control structures of touch screen panels are classified into mutual-capacitive touch control structure and self-capacitive touch control structure. Due to higher touch sensing accuracy and higher signal-to-noise (S/N) ratio, self-capacitive touch control structures are preferred by large panel manufacturers.

Currently, in self-capacitive touch control structure, a touch position of a finger is decided by the principle of self-capacitance. For example, multiple self-capacitive electrodes that are disposed in a same layer and independent from each other are provided in the touch control structure. When the touch screen is not contacted by a human body, capacitance of each self-capacitive electrode is at a fixed value. When the human body touches the screen, capacitance of the self-capacitive electrode at the touch position is at the fixed value plus the value of capacitance of the human body. In this way, a touch sense chip can decide the touch position by detecting change in the capacitance of each self-capacitive electrode during a touch period.

### SUMMARY

A first aspect of the invention provides an array substrate, comprising: a base substrate, a gate electrode and a gate line disposed on the base substrate, and an active layer disposed on the film layer comprising the gate electrode and the gate line; the array substrate further comprises: a pixel electrode disposed on the same layer as and electrically insulated from the active layer; a drain electrode, a source electrode and a date line disposed on the film layer comprising the active layer and the pixel electrode, wherein the drain electrode is electrically connected to the pixel electrode directly; a common electrode layer and a plurality of wires disposed on the film layer comprising the drain electrode, the source electrode and the date line and electrically insulated from each of the drain electrode, the source electrode, the date line and the pixel electrode. The plurality of wires is disposed on a different layer from the common electrode layer, the common electrode layer comprises a plurality of self-capacitive electrodes disposed on a same layer and insulated from each other, and each of the wires is electrically connected to a corresponding self-capacitive electrode through a via hole.

A second aspect of the invention provides a display device comprising the above array substrate.

A third aspect of the invention provides a method for fabricating an array substrate. The method comprises: forming a gate electrode and a gate line on a base substrate; forming an active layer and a pixel electrode disposed on the same layer and electrically insulated from each other on the film layer comprising the gate electrode and the gate line; forming a drain electrode, a source electrode and a data line on the film layer comprising the active layer and the pixel electrode; wherein the drain electrode is electrically connected to the pixel electrode directly; forming a common electrode layer and a plurality of wires electrically insulated from each of the drain electrode, the source electrode, the date line and the pixel electrode on the film layer comprising the drain electrode, the source electrode and the date line; the plurality of wires is disposed on a different layer from the common electrode layer, the common electrode layer comprises a plurality of self-capacitive electrodes disposed on a same layer and insulated from each other, and each of the wires is electrically connected to a corresponding self-capacitive electrode through a via hole.

### BRIEF DESCRIPTION OF THE DRAWINGS

In order to clearly illustrate the technical solution of the embodiments of the invention, the drawings of the embodiments will be briefly described in the following; it is obvious that the described drawings are only related to some embodiments of the invention and thus are not limitative of the invention.
Fig. 1 schematically illustrates a top view of a conventional capacitive touch control structure;
Fig. 2 schematically illustrates a side view of an array substrate in accordance with an embodiment of the invention;
Fig. 3 schematically illustrates a position relation of a plurality of wires and a data line in accordance with an embodiment of the invention;
Fig. 4 schematically illustrates a top view of a capacitive touch control structure in accordance with an embodiment of the invention; and
Fig. 5 schematically illustrates a driving time sequence of a display device in accordance with an embodiment of the invention.

### DETAILED DESCRIPTION

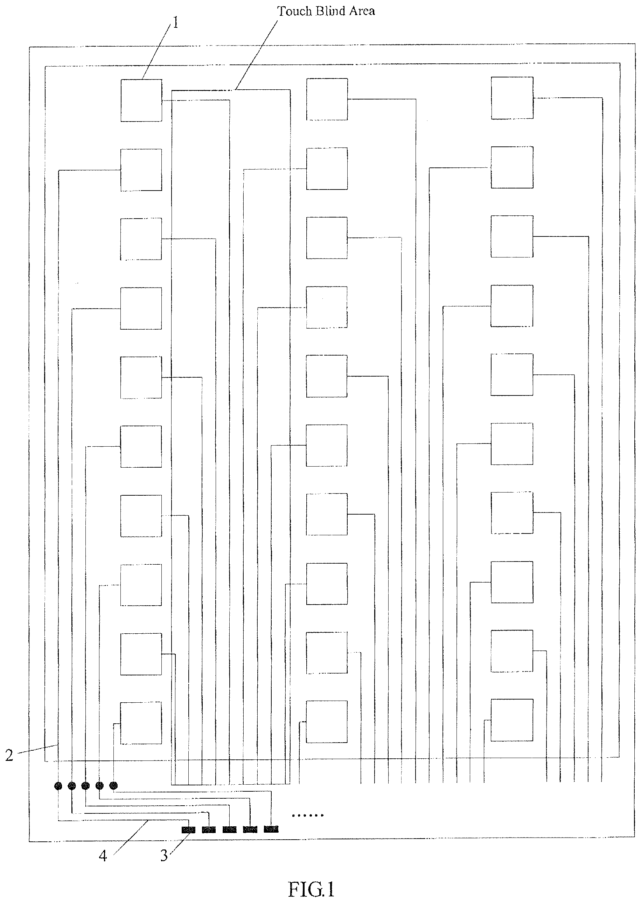

In a self-capacitive touch control structure, each of the self-capacitive electrodes is connected to a touch sense chip through an independent lead (wiring). As illustrated in Fig. 1, each lead comprises: a wire 2 connecting self-capacitive electrodes 1 to a frame of a touch screen, and a peripheral wire 4 disposed along the frame and functioning to connect the self-capacitive electrodes 1 to a terminal 3 of the touch sense chip.

In practice, there are provided many leads because the number of the self-capacitance electrodes is large. For example, if the area of one self-capacitive electrode is 5mm*5mm, there are 264 self-capacitive electrodes in a 5-inch liquid crystal display. If each self-capacitive electrode is designed smaller, there will be more self-capacitive electrodes, and accordingly more leads are required.

Moreover, to reduce the number of film layers during design, as illustrated in Fig. 1, the wires 2 of the leads are generally disposed on the same layer as the self-capacitive electrodes 1. Too many leads 2 will cause a relatively large touch blind area; the touch blind area is such an area where wirings are collectively routed in a touch screen, and the signals in this area are relatively chaotic. In this sense, the area is called touch blind area, which means the touch performance of this area cannot be guaranteed. In this sense, the touch blind area in conventional self-capacitive touch control structure is relatively large, causing the touch performance of touch screen comprising the conventional self-capacitive touch control structure to be relatively poor.

In order to clearly illustrate the technical solution of the embodiments of the invention, the drawings of the embodiments will be briefly described in the following; it is obvious that the described drawings are only related to some embodiments of the invention and thus are not limitative of the invention. Based on the described embodiments herein, those skilled in the art can obtain other embodiment(s), without any inventive work, which should be within the scope of the invention.

Unless otherwise defined, all the technical and scientific terms used herein have the same meanings as commonly understood by one of ordinary skill in the art to which the present invention belongs. The terms "first," "second," etc., which are used in the description and the claims of the present application for invention, are not intended to indicate any sequence, amount or importance, but distinguish various components. Also, the terms such as "a," "an," etc., are not intended to limit the amount, but indicate the existence of at least one. The terms "comprises," "comprising," "includes," "including," etc., are intended to specify that the elements or the objects stated before these terms encompass the elements or the objects and equivalents thereof listed after these terms, but do not preclude the other elements or objects. The phrases "connect", "connected", etc., are not intended to define a physical connection or mechanical connection, but may include an electrical connection, directly or indirectly. "On," "under," "right," "left" and the like are only used to indicate relative position relationship, and when the position of the object which is described is changed, the relative position relationship may be changed accordingly.

Thicknesses and shapes of film layers as illustrated in the figures do not reflect the actual scale, but only intend to illustrate details of the invention.

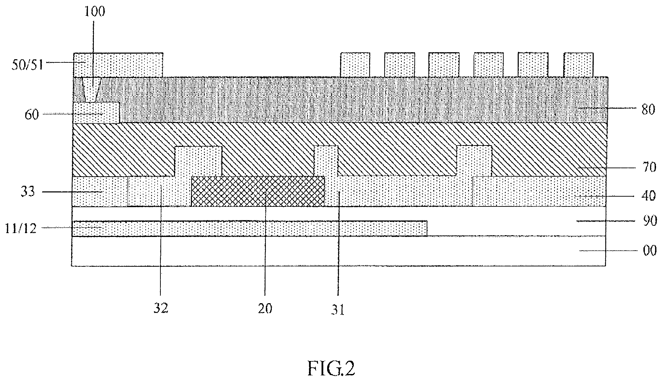

As illustrated in Fig. 2, an array substrate in accordance with an embodiment of the invention comprises: a base substrate 00, a gate electrode 11 and a gate line 12 disposed on the base substrate 00, an active layer 20 disposed on the film layer comprising the gate electrode 11 and the gate line 12. The array substrate further comprises: a pixel electrode 40 disposed on the same layer as and electrical insulated from the active layer 20; a drain electrode 31, a source electrode 32 and a date line 33 disposed on the film layer comprising the active layer 20 and the pixel electrode 40, where the drain electrode 31 is electrically connected to the pixel electrode 40 directly; a common electrode layer 50 and a plurality of wires 60 disposed on the film layer comprising the drain electrode 31, the source electrode 32 and the date line 33, and electrically insulated from each of the drain electrode 31, the source electrode 32, the date line 33 and the pixel electrode 40. The plurality of wires 60 is disposed on a different layer from the common electrode layer 50, the common electrode layer 50 comprises a plurality of self-capacitive electrodes 51 disposed on a same layer and insulated from each other, and each of the wires 60 is electrically connected to a corresponding self-capacitive electrodes 51 through a via hole 100.

In the embodiment of the invention, the array substrate comprises a common electrode layer and wires, the common electrode layer comprises a plurality of self-capacitive electrodes that are disposed on a same layer as and insulated from each other, and each of the wires is electrically connected to a corresponding self-capacitive electrode through a via hole. In this way, it is possible to embed the touch electrodes (i.e., self-capacitive electrodes) and the wires in the self-capacitive touch control structure in the array substrate, thereby facilitating the realizing of an embedded (in-cell) touch screen.

As the plurality of wires is disposed on a different layer from the common electrode layer, the touch blind area in self-capacitive touch control structure is removed, thereby improving the touch performance of touch screen with the self-capacitive touch control structure.

Moreover, as the common electrode layer comprises a plurality of self-capacitive electrodes disposed on the same layer and insulated from each other, it is possible to use the common electrode layer as touch electrodes in the self-capacitive touch control structure, avoiding the need to provide a separate film layer for the touch electrodes, thereby reducing the number of film layers.

As the pixel electrode is disposed on the same layer as the active layer, and the drain electrode is electrically connected to the pixel electrode directly, the number of film layers comprised in the array substrate is decreased. Moreover, because the mask plate used to fabricate the via hole which is configured to electrically connect the pixel electrode and the drain electrode can be omitted, the complexity and cost of fabricating the array substrate is reduced.

It is acceptable as long as the position connection relationship between the wires in the embodiment of the invention meets the following requirement: the wires are located on the film layer comprising the drain electrode, the source electrode and the date line, and are electrically insulated from each of the drain electrode, the source electrode, the date line and the pixel electrode; and, the wires are disposed on a different layer from the common electrode layer, and each of the wires is electrically connected to a corresponding self-capacitive electrode through a via hole.

The position relationship between the wires and the plurality of film layers comprised in the array substrate in the embodiments of the invention will be described in the following.
(1). The film layer comprising the plurality of wires is disposed between the film layer comprising the drain electrode, the source electrode and the data line and the common electrode layer.

The configuration in which the film layer comprising the plurality of wires is disposed between the film layer, which comprises the drain electrode, the source electrode and the data line, and the common electrode layer can reduce interference by capacitance of the human body upon the signal transmitted in the wire.

As an example, a passivation layer is disposed between the film layer, which comprises the drain electrode, the source electrode and the data line, and the common electrode layer; the film layer comprising the plurality of wires may be disposed between the film layer comprising the drain electrode, the source electrode and the data line and the passivation layer, or disposed between the passivation layer and the common electrode layer.

As an example, in an array substrate as illustrated in Fig. 2, a passivation layer 70 is disposed between and the film layer having a drain electrode 31, a source electrode 32 and a data line 33 and a common electrode layer 50, the film layer comprising a plurality of wires 60 is disposed between the passivation layer 70 and the common electrode layer 50.

As an example, the array substrate further comprises: a first insulation layer 80 comprising a via hole 100 and disposed between the film layer having wires 60 and the common electrode layer 50; a wire 60 is electrically connected to a self-capacitive electrode 51 through the via hole 100 provided in the first insulation layer 80.

It should be noted that, the configuration in which the film layer comprising the plurality of wires is disposed between the film layer comprising the drain electrode, the source electrode and the data line and the passivation layer is similar to the configuration in which the plurality of wires being disposed between the passivation layer and the common electrode layer. They are different from each other only in that, when the film layer comprising the plurality of wires is disposed between the film layer comprising the drain electrode, the source electrode and the data line and the passivation layer, the first insulation layer is disposed between the film layer comprising the drain electrode, the source electrode and the data line and the film layer comprising the plurality of wires comprises no via holes, while the passivation layer needs to comprise via holes.

As an example illustrated in Fig. 2, a gate insulation layer 90 is disposed between the film layer comprising the gate electrode 11 and the gate line 12 and the film layer comprising the active layer 20 and the pixel electrode 40.
(2). The plurality of wires is disposed in the film layer above the common electrode layer.

The plurality of wires is disposed in the film layer above the common electrode layer, thus the connection relationship of a plurality of film layers comprised in a present array substrate can remain unchanged.

As an example, the array substrate further comprises a second insulation layer comprising the via hole and disposed between the film layer having the wires and the common electrode layer; a wire is electrically connected to the self-capacitive electrode through the via hole comprised in the second insulation layer.

In the following, the position of the wires in the embodiment of the invention will be described based on different position relationships between the wires and the gate line and/or the data line.

As an example, an orthographic projection of a wire on the base substrate is within an orthographic projection of the data line on the base substrate; and/or the orthographic projection of a wire on the base substrate is within that of the gate line on the base substrate. Such a configuration has the following advantageous effects: 1) guaranteeing that electric field produced by the wires will not influence electric field in the pixel aperture region, thereby not affect normal display; 2) preventing the transmissivity from being affected; 3) guaranteeing that an extension direction of the wires is the same as that of the data line, which is beneficial to the design of a narrow frame.

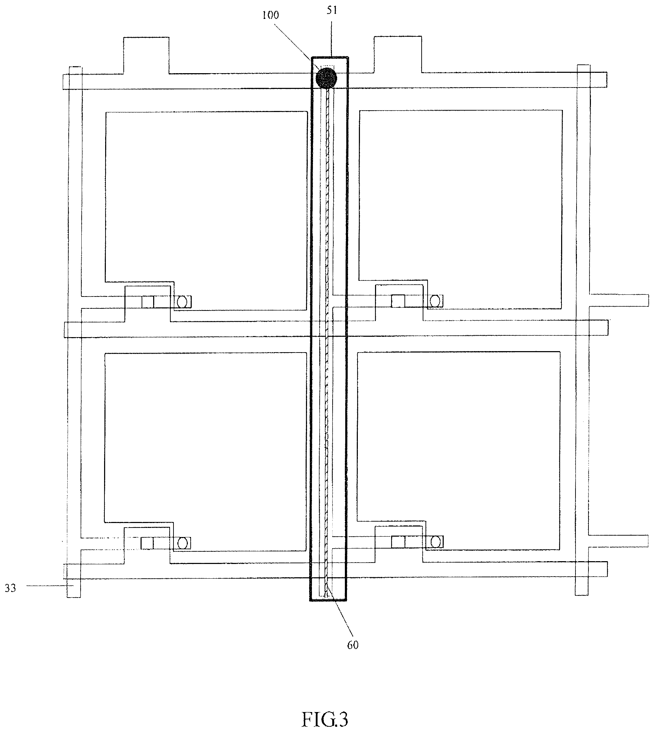

In an example as illustrated in Fig. 3, the orthographic projection of an wire 60 electrically connected to a self-capacitive electrode 51 through a via hole 100 on the base substrate (not shown in Fig. 3) is within that of a data line 33 on the base substrate.

It is noted that the position relationship between the wires and the gate line and data line in the embodiment of the invention may have be realized in other configurations. As an example, an orthographic projection of the data line and/or of the gate line on the base substrate may be within that of the wires on the base substrate. Alternatively, an orthographic projection of the wires on the base substrate may partly overlap that of the data line and/or that of the gate line on the base substrate. Alternatively, an orthographic projection of the plurality of wires on the base substrate may not overlap the orthographic projection of the data line and/or that of the gate line on the base substrate, etc. Redundant description will not be repeated here.

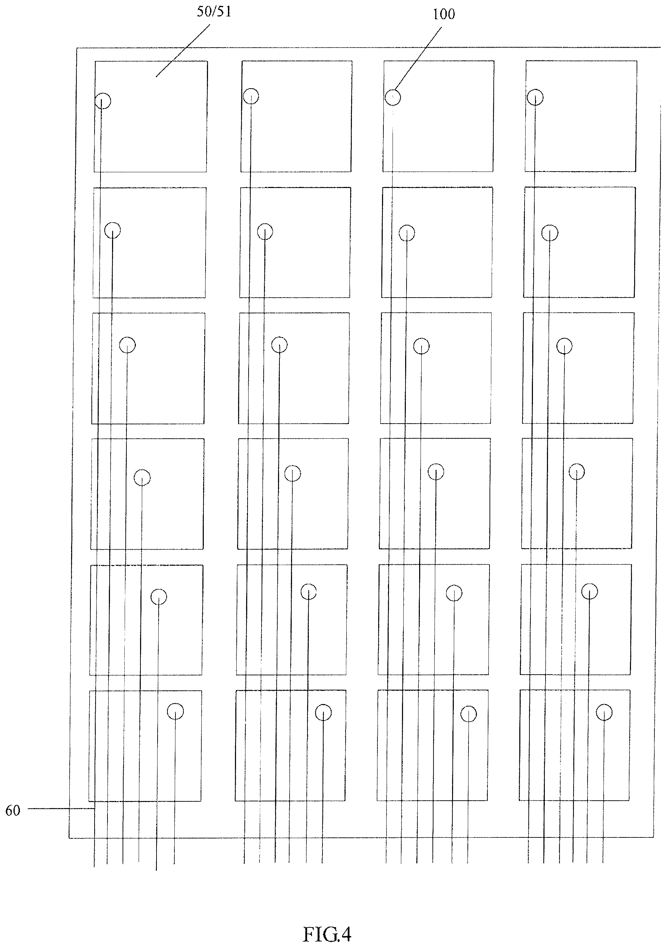

In an embodiment of the invention, a self-capacitive electrode may be electrically connected to at least one wire, and the wires electrically connected to different self-capacitive electrodes are different. In the following, the position relationship between the wires, the self-capacitive electrodes and the common electrode layer will be described with reference to Fig. 4.

As illustrated in Fig. 4, a common electrode layer 50 comprises a plurality of self-capacitive electrodes 51 disposed on a same layer and insulated from each other and arranged into a matrix. A wire 60 is electrically connected to a self-capacitive electrode 51, and respective self-capacitive electrodes 51 are connected to different wires 60. The wires 60 are disposed on a different layer from the common electrode layer 50, and each wire 60 is electrically connected to a corresponding self-capacitive electrode 51 through a via hole 100.

As an example, the wires 60 function as common electrode lines for supplying power to the common electrode layer 50 during a display scan period, thereby reducing the number of wiring comprised in the array substrate as well as the cost and complexity for fabricating the array substrate.

When the common electrode line is disposed on the same layer as the layer having the gate electrode and the gate line, disposed on a different layer from the common electrode layer, and electrically connected to the common electrode layer through the via hole, the wires function as the common electrode lines for supplying power to the common electrode layer during the display scan period. It can also avoid forming via holes by etching in the plurality of film layers disposed between the film layer comprising the gate electrode and the gate line and the common electrode layer so as to electrically connect the common electrode lines to the common electrode layer. As a result, the number of masks used during the fabrication of the array substrate is reduced and the cost and complexity for fabricating the array substrate is also reduced.

An embodiment of the invention further provides a display device comprising the array substrate in the above embodiment.

The display device is for example a mobile phone, tablet PC, a television, a display, a laptop computer, a digital photo-frame, a navigator or any products or components with a display function. For the structure of the array substrate in the display device please refer to the above embodiment, which will not be elaborated herein.

As the array substrate in the embodiment of the invention comprises therein touch electrodes (i.e., self-capacitive electrodes) and wires comprised in a self-capacitive touch control structure, the display device comprising the above array substrate has both display function and touch function.

As the array substrate in the embodiment of the invention can eliminate the touch blind area in self-capacitive touch control structure and reduce the number of film layers, the display device comprising the above array substrate can eliminate the touch blind area, improve the touch performance, and reduce the number of film layers too.

As an example, the display device further comprises: a color filter substrate disposed as opposed to the array substrate. As an example, the color filter substrate comprises the following sequentially disposed layers: a base substrate, a black matrix, a color filter layer, a planarization layer and a PS (i.e., post spacer) layer.

An embodiment of the invention further provides a scan method of a display device, comprising: performing touch scan and display scan in a time-sharing manner in one frame. A driving signal is applied to individual self-capacitive electrodes in a time-sharing manner through wires connected to the individual self-capacitive electrodes during a touch scan period; a feedback signal is received from the individual self-capacitive electrodes, and deciding touch positions according to the feedback signal.

Performing of touch scan and display scan in a time-sharing manner can help to reduce the mutual interference between the display signal and the touch signal, improving the display graphic quality and touch accuracy. As an example, the touch sense chip can apply a driving signal to the respective self-capacitive electrodes in a time-sharing manner through wires connected to the respective self-capacitive electrodes during the touch scan period; then the feedback signal from the respective self-capacitive electrode is received, and the touch positions are determined according to the feedback signal.

The touch sense chip is disposed on a circuit board. As an example, it may be disposed on a circuit board on the back of the display device, or may be disposed on a circuit board on the frame area of the display device, or may be disposed on a flexible circuit board on the array substrate. As an example, the display drive chip and the touch sense chip can be integrated into one chip to reduce the production cost.

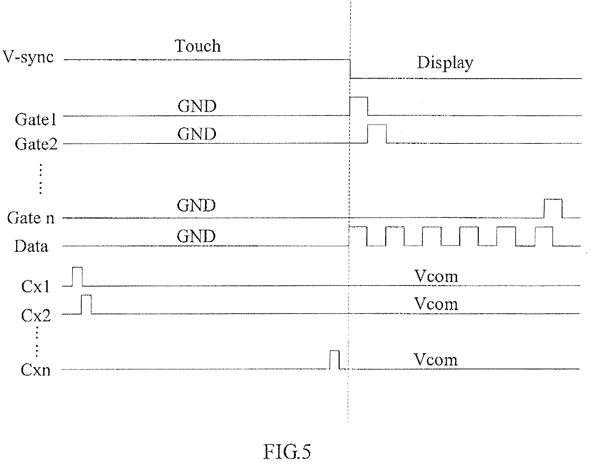

With reference to Fig. 5, the scan method of the display device in the embodiment of the invention will be described in more detail in the following.

As illustrated in Fig. 5, the time period for displaying each frame (V-sync) by a display device is divided into a display scan period (Display) and a touch scan period (Touch). As an example, the time for displaying a frame by the display device is 16.7ms, 5ms of which is selected as the touch scan period, and the rest 11.7s is selected as the display scan period. Alternatively, the lengths of the two periods can be adjusted according to the processing ability of the IC chip, which will not be defined here.

During the display scan period (Display), a gate scan signal is applied to each of gate signal lines Gate1, Gate2.... Gate n in the display device sequentially, and gray scale signals are applied to data signal lines Data, thereby realizing the display function.

During the touch period (Touch), the touch sense chip applies a driving signal to each of the self-capacitive electrodes Cx1....Cxn in a time-sharing manner. In the meantime, feedback signals from each of the self-capacitive electrodes Cx1....Cxn are received, and the touch position is decided through analyzing the feedback signals from each of the self-capacitive electrodes Cx1....Cxn, thus realizing the touch function.

As an example, the touch sense chip decides the touch position through analyzing the feedback signals from each of the self-capacitive electrodes Cx1....Cxn in a similar way as to the conventional technology, which will not be elaborated herein.

As illustrated in Fig. 5, a Vcom voltage is applied to each self-capacitive electrode during the display scan period, to guarantee the normal display of the display device.

As illustrated in Fig. 5, a GND (ground) signal is applied to a data line and each of the gate lines during the touch scan period, so as to reduce the interference from the signal of the data line and each of gate lines to the signal transmitted in the wires.

As an example, when applying a driving signal to each self-capacitive electrode in a time-sharing manner, the self-capacitive electrodes may be scanned horizontally in sequence so as to applying a driving signal to each self-capacitive electrode in a time-sharing manner. Alternatively, the self-capacitive electrodes may be scanned vertically in sequence so as to applying a driving signal to each self-capacitive electrode in a time-sharing manner. Alternatively, an all-driving method may also be used to apply a driving signal to each self-capacitive electrode.

An embodiment of the invention further provides a method for fabricating an array substrate, comprising the following steps:
Step 101, forming a gate electrode and a gate line on a base substrate;
Step 102, forming an active layer and a pixel electrode disposed on a same layer and electrically insulated from each other on the film layer comprising the gate electrode and the gate line;
Step 103, forming a drain electrode, a source electrode and a data line on the film layer comprising the active layer and the pixel electrode, wherein the drain electrode is electrically connected to the pixel electrode directly;
Step 104, forming a common electrode layer and a plurality of wires electrically insulated from each of the drain electrode, the source electrode, the date line and the pixel electrode on the film layer comprising the drain electrode, the source electrode and the date line; wherein the plurality of wires is disposed on a different layer from the common electrode layer, the common electrode layer comprises a plurality of self-capacitive electrodes disposed on a same layer and insulated from each other, and each of the wires is electrically connected to a corresponding self-capacitive electrode through a via hole.

The method will be described in details as a following example.

### Example 1

The method for fabricating an array substrate in the example as illustrated in Fig. 2 comprises the following steps.
Step 1, forming a gate electrode 11 and a gate line 12 on a base substrate 00.
   As an example, a gate electrode and a gate line electrically connected to each other on a base substrate are formed through a patterning process. Alternatively, a common electrode line disposed on and insulated from the layer comprising the gate electrode and the gate line is formed on the base substrate at the same time. In the embodiment of the invention, a common electrode line may be or may not be formed.
Step 2, forming a gate insulation layer 90 on the film layer comprising the gate electrode 11 and the gate line 12.
Step 3, forming an active layer 20 and a pixel electrode 40 disposed on and insulated from the layer comprising the gate insulation layer 90.
   As an example, an active layer is formed on the gate insulation layer through an active mask process; a pixel electrode is formed on the gate insulation layer through a pixel ITO mask process.
   Generally, the gate insulation layer need to be etched after the pixel electrode is finished, so as to form via holes exposing common electrode line in the gate insulation layer. In the embodiment of the invention, the etching process is not needed when the common electrode line is not formed.
Step 4, forming a drain electrode 31, a source electrode 32 and a data line 33 on the film layer comprising the active layer 20 and the pixel electrode 40, wherein the drain electrode 31 is electrically connected to the pixel electrode 40 directly.
   As an example, the drain electrode, the source electrode and the data line are formed through a SD mask process. The drain electrode 31 and the source electrode 32 are disposed on two sides of the active layer 20, the source electrode 32 is electrically connected to the active layer 20 directly, and the drain electrode 31 is electrically connected to the pixel electrode 40 directly.
Step 5, forming a passivation layer 70 on the film layer having the drain electrode 31, the source electrode 32 and the data line 33.
   On a conventional patterned passivation layer, via holes exposing the common electrode lines have to be formed in the passivation layer. In the embodiment of the invention, it is not necessary to form the via hole exposing the common electrode lines when the common electrode lines are not formed.
Step 6, forming a wire 60 on the passivation layer 70.
   As an example, the wire is formed through a metal wire mask process.
Step 7, forming an insulation layer 80 on the wire 60, wherein insulation layer 80 comprises a via hole 100 exposing the wire 60.
   As an example, the insulation comprising the via hole is formed through an insulating layer mask process. In the embodiment of the invention, it needs to form the via hole exposing the common electrode line in the insulation layer when fabricating the insulation layer. Moreover, when the insulation layer and the passivation layer are of the same material, the insulation layer and the passivation layer may be etched at the same time, thus forming the via hole exposing the common electrode line.
Step 8, forming a common electrode layer 50 comprising a plurality of self-capacitive electrodes 51 disposed on a same layer and insulated from each other on the insulation layer 80; wherein each of the plurality of wires 60 is electrically connected to a corresponding self-capacitive electrode 51 through a via hole 100 comprised in the insulation layer 80.

As an example, the common electrode is formed through an ITO mask process.

An embodiment of the invention further provides a method for fabricating a color filter substrate, comprising:
Step 1, forming a black matrix layer on a base substrate.
   As an example, the black matrix layer is formed on the base substrate through a black matrix (BM) mask process.
Step 2, forming RGB color filter layers on the black matrix layer;
   As an example, the RGB color filter layers are formed on the black matrix layer through a red (R) mask process, a green (G) mask process and a black (B) mask process.
Step 3, forming a planarization layer on the RGB color filter layer.
Step 4, forming a post spacer on the planarization layer.

As an example, the post spacer is formed through a post-spacer (PS) mask process.

In the above embodiment of the invention, the array substrate comprises a common electrode layer and wires, the common electrode layer comprises a plurality of self-capacitive electrodes disposed on a same layer and insulated from each other, and each of the wires is electrically connected to a corresponding self-capacitive electrode through a via hole; thus it is possible to form the touch electrode (i.e., self-capacitive electrode) and wires in the self-capacitive touch control structure in the substrate, thereby realizing an in-cell touch screens.

As the plurality of wires is disposed on a different layer from the common electrode layer, the touch blind area in the self-capacitive touch control structure is eliminated, thereby improving the touch performance of touch screen with the self-capacitive touch control structure.

Moreover, as the common electrode layer comprises a plurality of self-capacitive electrodes disposed on a same layer and insulated from each other, it is possible to use the common electrode layer as the touch electrodes in the self-capacitive touch control structure, avoiding the separate film layer for the touch electrodes, thereby reducing the number of film layers.

What are described above is related to the illustrative embodiments of the disclosure only and not limitative to the scope of the disclosure; the scopes of the disclosure are defined by the accompanying claims.

This application claims the priority of Chinese Application No. 201410240517.8, filed on May 30, 2014, which is entirely incorporated herein by reference as a part of the present application.

## Claims

1. An array substrate, comprising: a base substrate, a gate electrode and a gate line disposed on the base substrate, and an active layer disposed on the film layer comprising the gate electrode and the gate line;
the array substrate further comprising:
a pixel electrode disposed on the same layer as and electrically insulated from the active layer;
a drain electrode, a source electrode and a date line disposed on the film layer comprising the active layer and the pixel electrode, wherein the drain electrode is electrically connected to the pixel electrode directly; and
a common electrode layer and a plurality of wires disposed on the film layer comprising the drain electrode, the source electrode and the date line and electrically insulated from each of the drain electrode, the source electrode, the date line and the pixel electrode;
wherein the plurality of wires is disposed on a different layer from the common electrode layer, the common electrode layer comprises a plurality of self-capacitive electrodes disposed in a same layer and insulated from each other, and each of the wires is electrically connected to a corresponding self-capacitive electrode through a via hole.

2. The array substrate of claim 1, wherein the film layer comprising the plurality of wires is disposed between the film layer, which comprises the drain electrode, the source electrode and the data line, and the common electrode layer.

3. The array substrate of claim 2, further comprising a passivation layer disposed between the film layer, which comprises the drain electrode, the source electrode and the data line, and the common electrode layer;
wherein the film layer comprising the plurality of wires is disposed between the passivation layer and the common electrode layer.

4. The array substrate of claim 3, further comprising:
a first insulation layer comprising the via holes and disposed between the film layer comprising the plurality of wires and the common electrode layer;
wherein the plurality of wires is electrically connected to the self-capacitive electrodes through the via holes in the first insulation layer.

5. The array substrate of claim 3 or 4, wherein a gate insulation layer is disposed between the film layer comprising the gate electrode and the gate line and the film layer comprising the active layer and the pixel electrode.

6. The array substrate of claim 1, wherein the film layer comprising the plurality of wires is disposed above the common electrode layer.

7. The array substrate of claim 6, further comprising:
a second insulation layer comprising the via holes and disposed between the film layer comprising the plurality of wires and the common electrode layer;
wherein the plurality of wires is electrically connected to the self-capacitive electrodes through the via holes in the second insulation layer.

8. The array substrate of any of claims 1 to 7, wherein an orthographic projection of the plurality of wires on the base substrate is within an orthographic projection of at least one of the data line and the gate line on the base substrate.

9. The array substrate of any of claims 1 to 7, wherein the plurality of wires functions as common electrode lines for supplying power to the common electrode layer during a display scan period.

10. A display device comprising the array substrate of any of claims 1 to 9.

11. A method for fabricating an array substrate, comprising:
forming a gate electrode and a gate line on a base substrate;
forming an active layer and a pixel electrode disposed in a same layer and electrically insulated from each other on a film layer comprising the gate electrode and the gate line;
forming a drain electrode, a source electrode and a data line on a film layer comprising the active layer and the pixel electrode, wherein the drain electrode is electrically connected to the pixel electrode directly; and
forming a common electrode layer and a plurality of wires electrically insulated from each of the drain electrode, the source electrode, the date line and the pixel electrode on a film layer comprising the drain electrode, the source electrode and the date line;
wherein the plurality of wires is disposed on a different layer from the common electrode layer, the common electrode layer comprises a plurality of self-capacitive electrodes disposed in a same layer and insulated from each other, and each of the wires is electrically connected to a corresponding self-capacitive electrode through a via hole.

12. The method of claim 11, wherein a film layer comprising the plurality of wires is disposed between the common electrode layer and the film layer comprising the drain electrode, the source electrode and the data line.

13. The method of claim 12, further comprising:
forming a passivation layer before the common electrode layer and the plurality of wires are formed,
wherein the film layer comprising the plurality of wires is disposed between the passivation layer and the common electrode layer.

14. The method of claims 13, further comprising:
forming a first insulation layer comprising the via holes and disposed between the film layer comprising the plurality of wires and the common electrode layer;
wherein the plurality of wires is electrically connected to the self-capacitive electrodes through the via holes in the first insulation layer.

15. The method of claim 11, wherein the plurality of wires is disposed in the film layer above the common electrode layer.

16. The method of claims 11, further comprising:
forming a second insulation layer comprising the via holes and disposed between the film layer comprising the plurality of wires and the common electrode layer;
wherein the plurality of wires is electrically connected to the self-capacitive electrodes through the via holes in the second insulation layer.
